# EUROPEAN PATENT APPLICATION

(11) **EP 3 120 906 A1**
(43) Date of publication of application: **25.01.2017**
(21) Application number: 14886424.2
(22) Date of filing: 01.04.2014
(51) Int. Cl.: A63H 33/04, A63F 9/12, G09B 19/22

(54) **BLOCK TOY**

(30) Priority: 20.03.2014 KR 20140032616
(71) Applicant: Kim, Koan Seok, Seoul 156-070 (KR)
(72) Inventor: Kim, Koan Seok, Seoul 156-070 (KR)
(74) Representative: dompatent von Kreisler Selting Werner - Partnerschaft von Patent- und Rechtsanwälten mbB
(86) International application number: PCT/KR2014/002770
(87) International publication number: WO 2015/141889

(57) **Abstract**

The present invention relates to a block toy. Provided is a technology in which a block toy includes a finishing block or a control block together with general blocks having their own information so that a user can freely define a completion step, can express completion, and can check configuration information during a process of combining and arranging the blocks, and thus the technology is effective in understanding a structure, a principal and a concept for language or operation learning, the acquisition of knowledge or information, or the like. Furthermore, principal components, such as a memory device, a control device, a speaker, a screen, a power source, a communication module and a recording module, are provided, and thus the configurations of combinations of general blocks can be checked and notification of the configurations can be provided using only a small number of blocks, thereby considerably reducing manufacturing costs.

## Description

### Technical Field

The present invention relates to a block toy, and more particularly to technology for providing notification of a correct combination when blocks have been correctly combined.

### Background Art

Block toys have been used as toys with which users play while completing a shape, a diagram or the like using a method of connecting a plurality of pieces through fitting or arranging them.

Block toys include various types of toys ranging from the type of toys enabling one-dimensional combination to the type of toys enabling three-dimensional combination according to their type.

Block toys that can be used in language learning or the like through one-dimensional combination include a block toy for learning, which is presented in Korean Patent Application Publication 10-2006-0073183 (hereinafter referred to as the "conventional technology"). The conventional technology is a technology that can effectively induce a user to perform language learning by outputting a corresponding sound when blocks have been correctly combined and thus a specific sentence has been completed.

Block toys that enable two-dimensional combination include puzzle-type toys. Most puzzle-type toys have a form in which a plurality of pieces are correctly arranged or fitted together in the plane of a base plate.

Block toys that enable three-dimensional combination include various types of toys ranging from simple toys which are used by infants to toys which enable combination into complex shapes, such as a robot, a doll, etc.

Meanwhile, another conventional technology was developed by the applicant of the present invention, and is a technology that outputs a sound when blocks have been combined and thus an electrical circuit has been completed.

The present invention is a research result that was derived from a need to enable a user to more effectively use the other conventional technology.

### Disclosure

### Technical Problem

A first object of the present invention is to provide technology that, when a user combines blocks, enables the user to freely define a completion step and to express his or her intention to indicate the completion of a combination.

A second object of the present invention is to provide technology that enables information about a configuration at an interim step to be checked during a process of combining blocks.

### Technical Solution

In order to accomplish the above objects, according to a first embodiment of the present invention, there is provided a block toy, including: a plurality of general blocks each configured to include a chip having its own information and one or more connection terminals A enabling electric connection to one or more neighboring blocks; and at least one finishing block configured to provide notification of completion of a combination of blocks by being combined with the general blocks; wherein the finishing block includes: a speaker configured to output a sound corresponding to the combination of blocks; a memory device configured to record combination information regarding the combination of blocks and sound information to be output according to the combination information; a control device configured to, when the combination of blocks has been completed, analyze their own information transferred from the chips of the general blocks based on the combination information recorded in the memory device and output the sound corresponding to the combination information via the speaker; and connection terminals B configured to be electrically connectable to the connection terminals A of the plurality of general blocks.

The finishing block may further include a screen configured to output a screen corresponding to the combination of blocks; the memory device may record screen information to be output in accordance with the combination information; and the control device may output the screen corresponding to the combination information via the screen.

The finishing block may further include a communication module configured to be communicatively connectable to a computer in order to upgrade the information recorded in the memory device.

The finishing block may further include a communication module configured to transmit completed information to another terminal when the combination of blocks has been completed.

The finishing block may further include a recording module configured to record the sound regarding the combination of blocks; and the control device may output the sound regarding the completed combination of blocks, recorded via the recording module, via the speaker when the combination of blocks has been completed.

In order to accomplish the above objects, according to a second embodiment of the present invention, there is provided a block toy, including: a plurality of general blocks each configured to include a chip having its own information and one or more connection terminals A enabling electric connection to one or more neighboring blocks; and at least one finishing block configured to provide notification of completion of a combination of blocks by being combined with the general blocks; wherein the finishing block includes: a screen configured to output a screen corresponding to the combination of blocks; a memory device configured to record combination information regarding the combination of blocks and screen information to be output according to the combination information; a control device configured to, when the combination of blocks has been completed, analyze their own information transferred from the chips of the general blocks based on the combination information recorded in the memory device and output the screen corresponding to the combination information via the screen; and connection terminals B configured to be electrically connectable to the connection terminals A of the plurality of general blocks.

The finishing block may further include a communication module configured to be communicatively connectable to a computer in order to upgrade the information recorded in the memory device.

The finishing block may further include a communication module configured to transmit completed information to another terminal when the combination of blocks has been completed.

The finishing block may further include a recording module configured to record the sound regarding the combination of blocks; and the control device may output the sound regarding the completed combination of blocks, recorded via the recording module, via the speaker when the combination of blocks has been completed.

In order to accomplish the above objects, according to a third embodiment of the present invention, there is provided a block toy, including: a plurality of general blocks each configured to include a chip having its own information and one or more connection terminals A enabling electric connection to one or more neighboring blocks; and a control block configured to analyze a combination of general blocks; wherein the control block includes: a speaker configured to output a sound corresponding to the combination of blocks; a memory device configured to record combination information regarding the combination of blocks and sound information to be output according to the combination information; a control device configured to, when the combination of blocks has been completed, analyze their own information transferred from the chips of the general blocks based on the combination information recorded in the memory device and output the sound corresponding to the combination information via the speaker; and connection terminals B configured to be electrically connectable to the connection terminals A of the plurality of general blocks.

The control block may further include a screen configured to output a screen corresponding to the combination of blocks; the memory device may record screen information to be output in accordance with the combination information; and the control device may output the screen corresponding to the combination information via the screen.

The block toy may further include at least one finishing block configured to provide notification of completion of the combination of blocks by being combined with the general blocks.

The control block may further include a communication module configured to be communicatively connectable to a computer in order to upgrade the information recorded in the memory device.

The control block may further include a communication module configured to transmit completed information to another terminal when the combination of blocks has been completed.

The control block may further include a recording module configured to record the sound regarding the combination of blocks; and the control device may output the sound regarding the completed combination of blocks, recorded via the recording module, via the speaker when the combination of blocks has been completed.

In order to accomplish the above objects, according to a fourth embodiment of the present invention, there is provided a block toy, including: a plurality of general blocks each configured to include a chip having its own information and one or more connection terminals A enabling electric connection to one or more neighboring blocks; and a control block configured to analyze a combination of general blocks; wherein the control block includes: a screen configured to output a screen corresponding to the combination of blocks; a memory device configured to record combination information regarding the combination of blocks and screen information to be output according to the combination information; a control device configured to, when the combination of blocks has been completed, analyze their own information transferred from the chips of the general blocks based on the combination information recorded in the memory device and output the screen corresponding to the combination information via the screen; and connection terminals B configured to be electrically connectable to the connection terminals A of the plurality of general blocks.

The block toy may further include at least one finishing block configured to provide notification of completion of the combination of blocks by being combined with the general blocks.

The control block may further include a communication module configured to be communicatively connectable to a computer in order to upgrade the information recorded in the memory device.

The control block may further include a communication module configured to transmit completed information to another terminal when the combination of blocks has been completed.

The control block may further include a recording module configured to record the sound regarding the combination of blocks; and the control device may output the sound regarding the completed combination of blocks, recorded via the recording module, via the speaker when the combination of blocks has been completed.

### Advantageous Effects

According to the present invention, the following effects can be achieved.

First, principal components, such as the memory device, the control device, the speaker, the screen, the power source, the communication module, the recording module, etc., are all provided in the finishing block or control block, and thus information about combinations of general blocks, regarding linguistic, operational or diagrammatic combinations, a pictorial puzzle, or the like, can be checked and notified using only a small number of blocks, thereby reducing manufacturing costs.

Second, the completion step of a combination of general blocks can be freely defined and the content of a combination up to an interim step can be checked during a process of combination, and thus the present invention can be used for the understanding of a structure, a principle and a concept for the acquisition of knowledge or information, language learning, operation learning, or the like.

Third, various types of modification and extension can be performed through the upgrade of learning content, information, etc. using the finishing block or control block, and thus the various desires of a user can be fulfilled.

Fourth, information about the completion of a combination, information about the learning pattern of a user, information about frequently made mistakes, etc. can be exchanged with another communication terminal and a server, and thus various applications can be enabled in conjunction with the other communication terminal.

Fifth, a sound can be output in voice familiar to a user in response to a combination of blocks, and thus familiarity with use and the effect of learning can be improved.

### Description of Drawings

Fig. 1 is a schematic diagram of a block toy according to a first embodiment of the present invention;
Fig. 2 is a diagram showing the configuration of a general block that is applied to the block toy of Fig. 1;
Fig. 3 is a diagram showing the configuration of a finishing block that is applied to the block toy of Fig. 1;
Fig. 4 is a reference view illustrating the function of a communication module that is applied to the finishing block of Fig. 3;
Figs. 5 to 9 are reference views illustrating application examples of the block toy of Fig. 1;
Fig. 10 is a schematic diagram of a block toy according to a second embodiment of the present invention;
Fig. 11 is a diagram showing the configuration of a general block that is applied to the block toy of Fig. 9;
Fig. 12 is a diagram showing the configuration of a control block that is applied to the block toy of Fig. 9;
Figs. 13 and 14 are reference views illustrating application examples of the block toy of Fig. 10;
Fig. 15 is a schematic diagram of a block toy according to a third embodiment of the present invention;
Fig. 16 is a diagram showing the configuration of a general block that is applied to the block toy of Fig. 15;
Fig. 17 is a diagram showing the configuration of a finishing block that is applied to the block toy of Fig. 15;
Fig. 18 is a diagram showing the configuration of a control block that is applied to the block toy of Fig. 15; and
Fig. 19 is a reference diagram illustrating another form of a block toy according to a third embodiment.

### Best Mode

Preferred embodiments of the present invention will be described below with reference to the accompanying drawings. Redundant descriptions will be omitted or abridged for brevity of description as much as possible.

### <First embodiment>

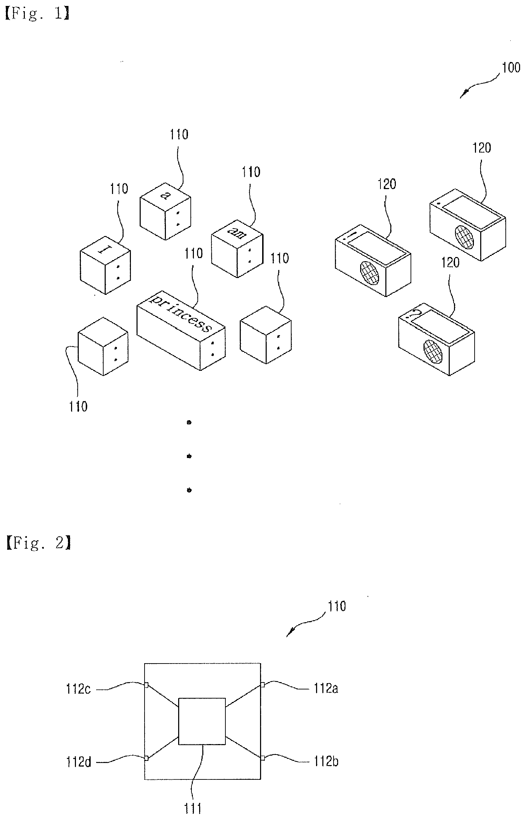

A block toy according to the present invention includes general blocks 110 and finishing blocks 120, as shown in Fig. 1.

Fig. 2 is a diagram showing the configuration of each of the general blocks 110 that are applied to the block toy 100.

Each of the general blocks 110 includes a chip 111 configured to have its own information therein, and connection terminals 112a to 112d configured to be electrically connectable to one or more neighboring general blocks 110 or a finishing block 120. In this case, its own information may be a spelling, a word, a syllable, a numeral, a musical note, a sound, a piece of a picture, or one of various types of shapes.

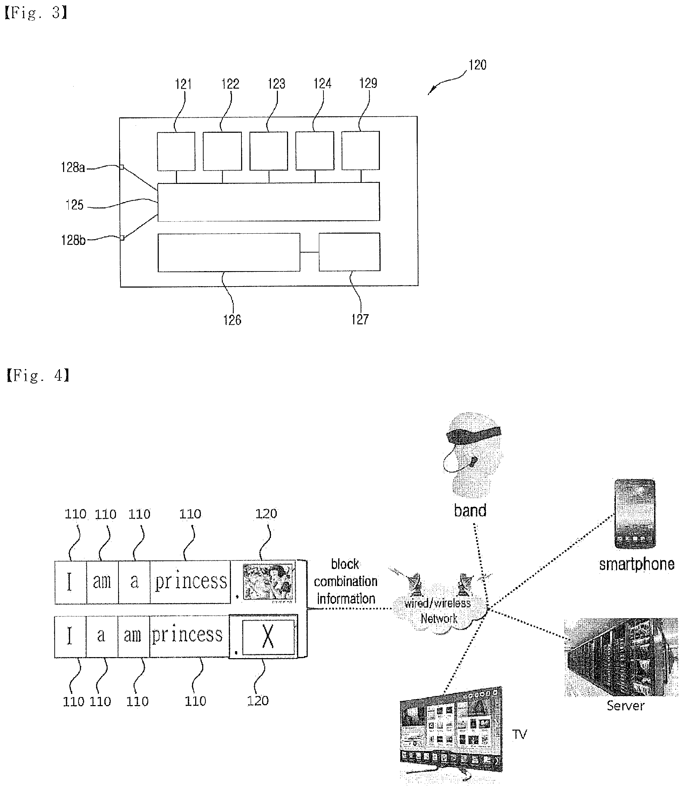

Each of the finishing blocks 120 is a block configured to enable a user to check information about the configuration of a combination of blocks during a combination process or to provide notification that a combination of blocks has been completed. That is, the user includes the finishing block 120 in a combination of blocks, thereby checking information about the configuration of the correct or incorrect combination of blocks and notifying an electric circuit, generated based on the combination of blocks, that the combination has been completed. The finishing block 120 includes a memory device 121, a speaker 122, a screen 123, a communication module 124, a control device 125, a power module 126, a switch 127, connection terminals 128a to 128d, and a recording module 129, as reference is made to the configuration diagram of Fig. 3.

Combination information regarding correct and incorrect combinations of blocks, and sound information and screen information to be output according to the combination information are recorded in the memory device 121.

The speaker 122 outputs sound information corresponding to a result regarding a correct or incorrect combination of blocks.

The screen 123 outputs screen information corresponding to a result regarding a correct or incorrect combination of blocks.

The communication module 124 may be communicatively connected to a computer via a wired/wireless connection in order to upgrade the information recorded in the memory device 121. In this case, the computer may be defined as all communication tools that have a communication unit and thus is accessible to the Internet, as well as communication devices, such as a desktop computer, a notebook computer, and a smartphone.

Furthermore, the communication module 124 exchanges completed information with another terminal having a communication unit once a combination of blocks has been completed. In this case, the completed information may be information indicating that the combination of blocks is correct or incorrect, may be a sentence, a picture, or a score completed by the combination of blocks, or may be information about the learning pattern of a user. In this case, the other terminal having a communication unit may be a smartphone or a television set possessed by a parent of the user, as reference is made to Fig. 4, and may be further a household electronic appliance, a vehicle, a doll, an accessory, or the like. Furthermore, the other terminal may be a server configured to analyze and process data, and may be a separate transmission and reception tool set in the block toy 100 according to the present invention. An example of the separate transmission and reception tool may be a helmet, a band, or the like configured to provide a stimulus or a signal to the brain. That is, when a user combines blocks configured to enable linguistic or mathematical elements to be learned while wearing the helmet or band, a stimulus or a signal is generated to the left brain via the helmet or band. When a user combines blocks configured to enable music, a picture, a diagram, or the like to be learned while wearing the helmet or band, a stimulus or a signal is generated to the right brain. This embodiment may be used in the development of the brain, the improvement of memory, the prevention of Alzheimer's disease, etc. in various manners. Furthermore, the form of an electrical stimulus generated when blocks have been correctly combined and the form of an electrical stimulus generated when blocks have been incorrectly combined may be made different, and thus the user may intuitively determine whether a combination of blocks is correct via an electrical stimulus applied to the brain (or the head). When the transmission and reception tool is a television set, the user identifies information about a combination via the television set, instead of the speaker 122 or screen 123 of the finishing block 120. Furthermore, when the transmission and reception tool is a smartphone of a parent, the parent may remotely check whether a combination of blocks has been completed or check information about a completed combination (a sentence or a picture) via the smartphone.

The control device 125 controls the above-described individual components. In particular, the control device 125 analyzes their own information, transferred from the general blocks 110 according to the combination of blocks, based on the correct or incorrect combination information recorded in the memory device 121, and outputs a sound or a screen corresponding to the sound information or screen information recorded in the memory device 121 via the speaker 122 or screen 123 when the combination of blocks is correct. Accordingly, the finishing block 120 also functions as a control block. Furthermore, the control device 125 may have its own information about the finishing block 120. It will be apparent that the control device 125 may be configured not to react to a result regarding an incorrect combination.

The power module 126 supplies power required for operations of the above-described individual components. The power module 126 may be configured to supply the power of at least any one of a battery, an electric accumulator, and a commercial power source.

The switch 127 selectively connects and disconnects power to and from an electric circuit, including the above-described components, via the power module 126. The switch 127 may be configured to automatically or manually perform switching operation.

The connection terminals 128a and 128b are provided to be electrically connected to the general blocks 110.

The recording module 129 enables the sound corresponding to the combination of blocks to be recorded. That is, the memory device 121 stores added information when a parent of the user records voice sentences based on sentences corresponding to new input information regarding blocks that may be generated by combinations of blocks, and the control device 125 outputs a recorded voice matching a specific sentence via the speaker 122 when the user has completed a combination of blocks regarding the specific sentence. Although the recorded sound information is recorded in the memory device 121 in the present embodiment, a separate memory device may be provided in the recording module 129 in another embodiment.

In the block toy 100 configured as described above, when general blocks 110 are combined with any one finishing block 120, a sound or screen corresponding to a correct or incorrect combination of blocks is output via the speaker 122 or screen 123, thereby causing the interest of the user or inducing the user to perform various types of learning.

Next, application examples of the above-described block toy 100 will be described.

### <First application example - example of language learning>

The block toy 100 may have a story in which a fairy tale, such as the Snow White, is abridged. That is, as shown in Fig. 1, some general blocks 110 have words (for example, "I," "am," and "princess") appearing in the story as their own information, and finishing blocks 120 have special marks (for example, ".," "?," and "!") as their own information.

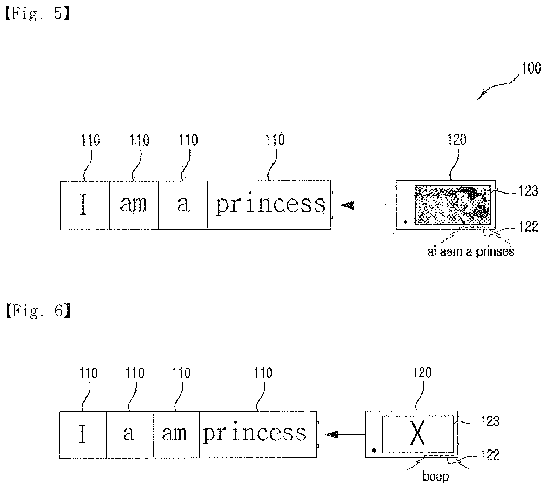

When a user connects general blocks 110 to each other and connects a finishing block 120 indicating that a sentence ends, as shown in Fig. 5, a control device 125 determines whether a combination of blocks is correct by analyzing their own information transferred from the chips 111 of the combined general blocks 110 and its own information possessed by the finishing block 120.

Once the sentence has been correctly completed, as shown in Fig. 5, the control device 125 of the finishing block 120 outputs a sound corresponding to sound information recorded in a memory device 121 via a speaker 122, and outputs a screen of a picture of the Snow White via a screen 123. It will be apparent that it may be possible to additionally provide the effect of five senses-based learning to a user by outputting light or vibration while outputting a sound, a picture, or an image. In this case, the finishing block 120 needs to further include a light generation device or a vibration generation device.

When blocks are combined such that a sentence is incorrect, as shown in Fig. 6, the speaker 122 or screen 123 does not operate. It will be apparent that in an embodiment, a control device 125 may be configured to output an alarm sound, indicating that a sentence made through the combination is incorrect, via a speaker 122 or to output an alarm screen via a screen 123.

In the present application example, the control device 125 may be implemented to determine that a sentence has been correctly completed when the user has made any sentence, included in the Snow White story, through correct combination or when the user has made even a sentence, not included in the Snow White story, through correct combination compliant with grammar. However, in an embodiment, an implementation may be made such that a sequence is assigned to a story from beginning to end and a control device 125 recognizes that a subsequent sentence has been completed through correct combination only when a previous sentence has been completed through combination.

Meanwhile, when the user has learned all sentences included in the Snow White story, the user may download a new story via the communication module 124, and update information recorded in the memory device 121 or add information. By doing so, the user may enjoy language learning via a new Pinocchio story by using the existing general blocks 110.

### <Second application example - example of mathematics learning>

The block toy 100 according to the present invention may be also used for mathematics learning.

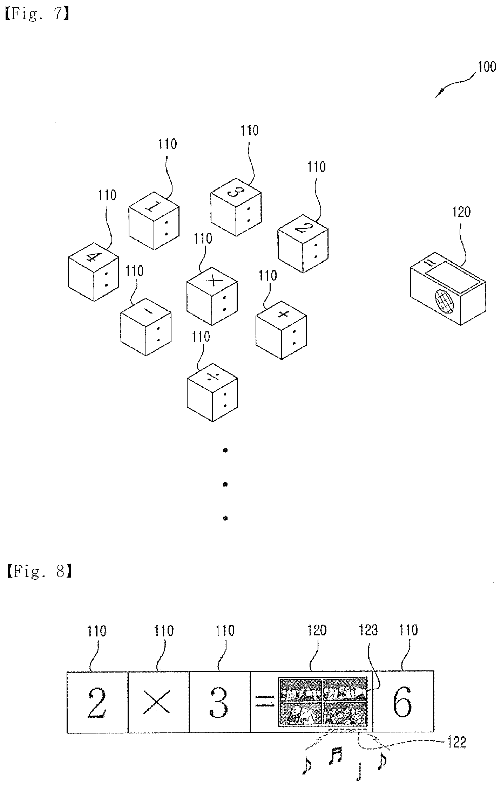

As shown in Fig. 7, general blocks 110 have various types of numerals or operational signs as their own information, and a finishing block 120 has an equal sign (=) as its own information.

When a user connects general blocks 110 with the finishing block 120, a control device 125 determines whether a combination is correct by analyzing their own information transferred from the chips 111 of the combined general blocks 110.

When a completed equation is correct, as shown in Fig. 8, the control device 125 outputs a "ding-dong-dang" sound via a speaker 122 or outputs a circle screen via a screen 123. In this case, the output sound may be music favored by the user, and the output screen may be a cartoon favored by the user.

It will be apparent that when the equation is incorrect, the speaker 122 or screen 123 does not operate or an alarm sound or an alarm screen may be output.

Unlike in the present application example, the finishing block 120 does not necessarily need to be combined behind combined general blocks or at a last sequential position.

### <Third application example - example of puzzle>

The block toy 100 according to the present invention may be also used for picture learning.

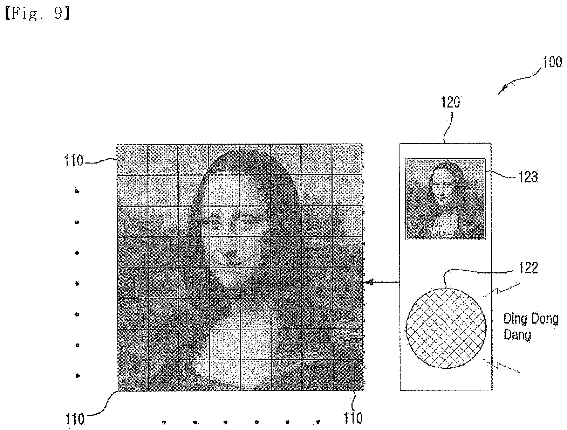

As shown in Fig. 9, general blocks 110 have pieces of a picture (for example, "the Mona Lisa") as their own information.

When a user arranges general blocks 110, electrically connects the general blocks 110 to each other and then connects a finishing block 120, a control device 125 determines whether a combination is correct by analyzing their own information transferred from the chips 111 of the combined general blocks 110. Furthermore, when a combination of pieces of the picture is correct, the control device 125 outputs a "ding-dong-dang" sound via a speaker 122 or outputs a screen corresponding to the completed picture or information about the completed picture (painter information, genre information, etc.) via a screen 123.

### <Second embodiment>

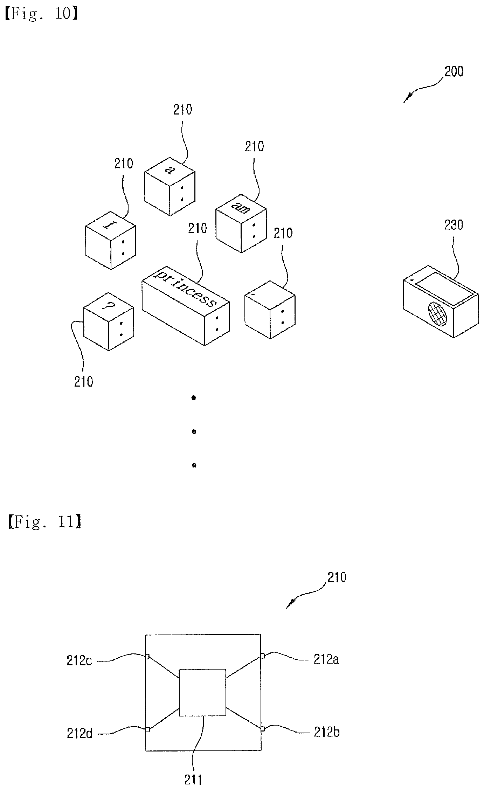

As shown in Fig. 10, a block toy 200 according to a second embodiment includes general blocks 210 and a control block 230.

Fig. 11 is a diagram showing the configuration of each of the general blocks 210 that are applied to the block toy 200 according to the present embodiment.

As shown in Fig. 11, each of the general blocks 210 includes a chip 211 configured to have its own information therein, and connection terminals 212 configured to be electrically connectable to one or more neighboring general blocks 210 or the control block 230.

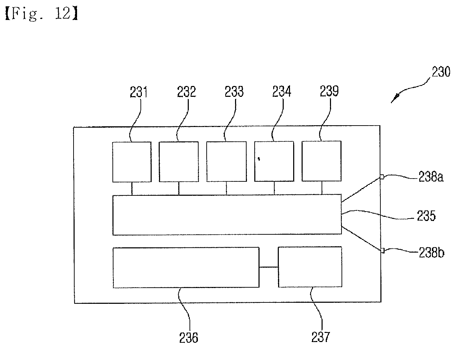

The control block 230 determines whether a combination of general blocks 210 is correct, and outputs a sound or a screen when the combination of general blocks 210 is correct. This control block 230 includes a memory device 231, a speaker 232, a screen 233, a communication module 234, a control device 235, a power module 236, a switch 237, connection terminals 238a and 238b, and a recording module 239, as reference is made to the configuration diagram of Fig. 12.

Since the functions of the memory device 131, the speaker 232, the screen 233, the communication module 234, the control device 235, the power module 236, the switch 237, the connection terminals 238a and 238b, and the recording module 239 are the same as those of the first embodiment, descriptions thereof are omitted.

In the present embodiment, the control block 230 may be electrically connected to, for example, a general block 110 that constitutes a foremost part of a completed sentence. It will be apparent that control block 230 may be implemented to be connected to a general block 110 that constitutes a hindmost portion of the completed sentence.

The block toy 200 according to the present embodiment may also have the above-described first to third application examples without significant changes.

### <Application example of performing checking during a process>

The block toy 200 according to the present invention may be more advantageously used during a process of combining blocks.

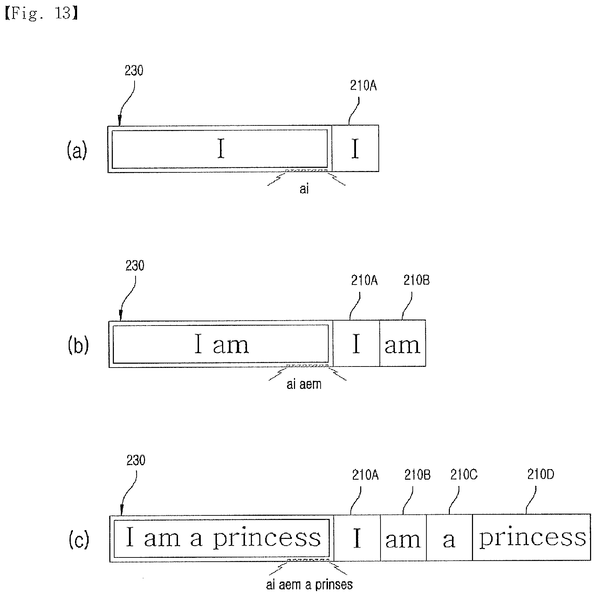

When a user connects a general block 110A having its own information "I" to a control block 230, as shown in Fig. 13(a), the control block 230 outputs the sound "aI" via a speaker 232, and outputs "I" via a screen 233. Thereafter, when the user connects a general block 210B having its own information "am" to a side of the general block 210 having its own information "I," as shown in Fig. 13(b), the control block 230 outputs the sound "aI æm" via the speaker 232, and outputs "I am" via the screen 233. In this manner, pieces of combination information obtained during the combination process are output until a final sentence is generated, as shown in Fig. 13(c). When a user makes a combination in which word order or grammar is incorrect, as in the case of "I + a + am," during the combination process, provision may be made such that a sound or a screen indicative of the incorrect combination is output via the control block such that the user can be notified that combined content is incorrect during the combination process and an incorrect part can be clearly identified. As described above, the block toy 200 outputs pieces of information obtained during the learning process, thereby being advantageously used in process learning. It will be apparent that the block toy 200 may be used in advanced learning via phrases (an adverbial phrase, etc.) added to a basic sentence.

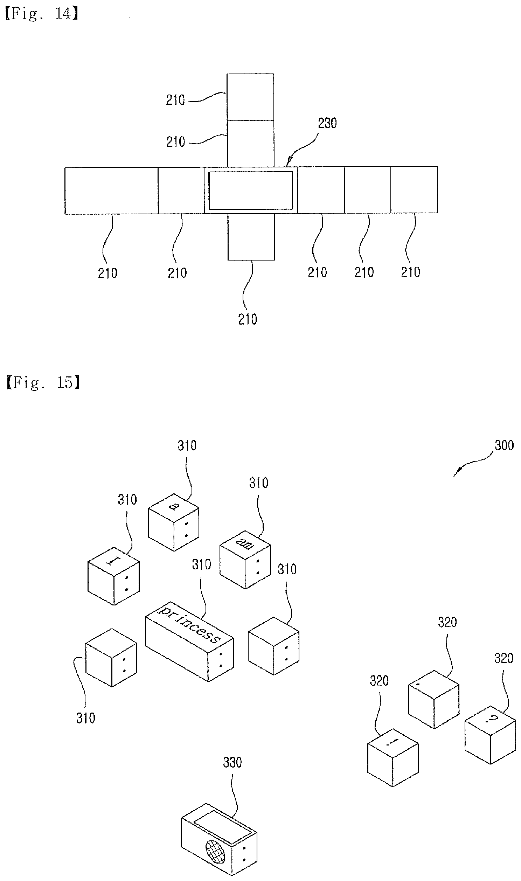

Meanwhile, in the present embodiment, the control block 230 may have connection terminals on various surfaces thereof, as shown in Fig. 14, and thus may be implemented to enable a method of connecting to general blocks 310 at respective surfaces thereof.

### <Third embodiment>

As shown in Fig. 15, a block toy 300 according to a second embodiment includes general blocks 310, finishing blocks 320, and a control block 330.

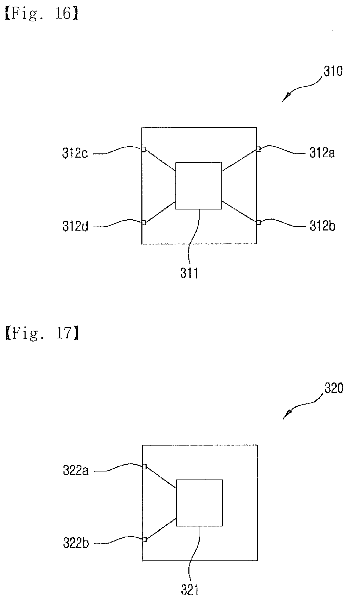

Fig. 16 is a diagram showing the configuration of each of the general blocks 310 that are applied to the block toy 300 according to the present embodiment.

Each of the general blocks 310 includes a chip 311 configured to have its own information therein, and connection terminals 312a to 312d configured to be electrically connectable to one or more neighboring general blocks 310, one or more finishing blocks 320, or the control block 330.

Each of the finishing blocks 320 notifies the control block 330 that a combination of blocks has been completed. For this purpose, each of the finishing blocks 320 has a chip 321 and connection terminals 322a and 322b, as reference is made to the configuration diagram of Fig. 17. The chip 321 has notification information, providing notification that a combination of blocks has been completed, and its own information (".," "!," "?," or the like).

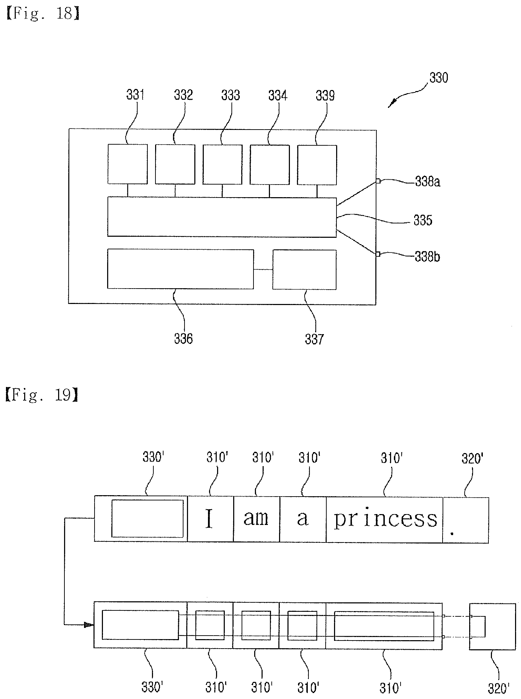

When the control block 330 receives the notification information via the finishing block 320, the control block 330 determines whether the combination of general blocks 310 is correct, and outputs a sound or a screen when the combination of general blocks 310 is correct. This control block 330 includes a memory device 331, a speaker 332, a screen 333, a communication module 334, a control device 335, a power module 336, a switch 337, connection terminals 338a and 338b, and a recording module 339, as reference is made to the configuration diagram of Fig. 18.

Since the functions of the memory device 331, the speaker 332, the screen 333, the communication module 334, the control device 335, the power module 336, the switch 337, the connection terminals 338a and 338b, and the recording module 339 are the same as those of the first embodiment, descriptions thereof are omitted.

In an embodiment, a finishing block 320' may have only a function of completing an electric circuit generated by a combination of general blocks 310' and a control block 330,' as shown in Fig. 19.

The block toy 300 according to the present embodiment may have various types of application examples without significant changes.

Although the above-described embodiments or application examples have been described using language learning, mathematics learning, and art learning as examples, the block toys 100, 200 and 300 according to the present invention may be used for various types of learning, such as nature learning, history learning, etc.

For example, the natural knowledge "insects are composed of a head, a trunk, and an abdomen" may be enabled to be learned via a combination of blocks, and historical knowledge may be enabled to be learned via a combination of blocks based on the chronological order of events.

Although the detailed description of the present invention has been given in conjunction with the embodiments described with reference to the accompanying drawings, as described above, the above-described embodiments have been described using the preferred examples of the present invention. Accordingly, it should not be appreciated that the present invention is limited to only the above-described embodiments, but should be appreciated that the scope of the rights of the present invention corresponds to the following claims and concepts equivalent to the claims.

### (Description of reference symbols)

- 100:: block toy
- 110:: general block
- 111:: chip
- 112a to 112d:: connection terminal
- 120:: finishing block
- 121:: memory device
- 122:: speaker
- 123:: screen
- 124:: communication module
- 125:: control device
- 128a to 128d:: connection terminal
- 129:: recording module

## Claims

1. A block toy, comprising:
a plurality of general blocks each configured to include a chip having its own information and one or more connection terminals A enabling electric connection to one or more neighboring blocks; and
at least one finishing block configured to provide notification of completion of a combination of blocks by being combined with the general blocks;
wherein the finishing block comprises:
a speaker configured to output a sound corresponding to the combination of blocks;
a memory device configured to record combination information regarding the combination of blocks and sound information to be output according to the combination information;
a control device configured to, when the combination of blocks has been completed, analyze their own information transferred from the chips of the general blocks based on the combination information recorded in the memory device and output the sound corresponding to the combination information via the speaker; and
one or more connection terminals B configured to be electrically connectable to the one or more connection terminals A of the plurality of general blocks.

2. The block toy of claim 1, wherein:
the finishing block further comprises a screen configured to output a screen corresponding to the combination of blocks;
the memory device records screen information to be output in accordance with the combination information; and
the control device outputs the screen corresponding to the combination information via the screen.

3. A block toy, comprising:
a plurality of general blocks each configured to include a chip having its own information and one or more connection terminals A enabling electric connection to one or more neighboring blocks; and
at least one finishing block configured to provide notification of completion of a combination of blocks by being combined with the general blocks;
wherein the finishing block comprises:
a screen configured to output a screen corresponding to the combination of blocks;
a memory device configured to record combination information regarding the combination of blocks and screen information to be output according to the combination information;
a control device configured to, when the combination of blocks has been completed, analyze their own information transferred from the chips of the general blocks based on the combination information recorded in the memory device and output the screen corresponding to the combination information via the screen; and
one or more connection terminals B configured to be electrically connectable to the one or more connection terminals A of the plurality of general blocks.

4. The block toy of any one of claims 1 to 3, wherein the finishing block further comprises a communication module configured to be communicatively connectable to a computer in order to upgrade the information recorded in the memory device.

5. The block toy of any one of claims 1 to 3, wherein the finishing block further comprises a communication module configured to transmit completed information to another terminal when the combination of blocks has been completed.

6. The block toy of any one of claims 1 to 3, wherein:
the finishing block further comprises a recording module configured to record the sound regarding the combination of blocks; and
the control device outputs the sound regarding the completed combination of blocks, recorded via the recording module, via the speaker when the combination of blocks has been completed.

7. A block toy, comprising:
a plurality of general blocks each configured to include a chip having its own information and one or more connection terminals A enabling electric connection to one or more neighboring blocks; and
a control block configured to analyze a combination of general blocks;
wherein the control block comprises:
a speaker configured to output a sound corresponding to the combination of blocks;
a memory device configured to record combination information regarding the combination of blocks and sound information to be output according to the combination information;
a control device configured to, when the combination of blocks has been completed, analyze their own information transferred from the chips of the general blocks based on the combination information recorded in the memory device and output the sound corresponding to the combination information via the speaker; and
one or more connection terminals B configured to be electrically connectable to the one or more connection terminals A of the plurality of general blocks.

8. The block toy of claim 7, wherein:
the control block further comprises a screen configured to output a screen corresponding to the combination of blocks;
the memory device records screen information to be output in accordance with the combination information; and
the control device outputs the screen corresponding to the combination information via the screen.

9. A block toy, comprising:
a plurality of general blocks each configured to include a chip having its own information and one or more connection terminals A enabling electric connection to one or more neighboring blocks; and
a control block configured to analyze a combination of general blocks;
wherein the control block comprises:
a screen configured to output a screen corresponding to the combination of blocks;
a memory device configured to record combination information regarding the combination of blocks and screen information to be output according to the combination information;
a control device configured to, when the combination of blocks has been completed, analyze their own information transferred from the chips of the general blocks based on the combination information recorded in the memory device and output the screen corresponding to the combination information via the screen; and
one or more connection terminals B configured to be electrically connectable to the one or more connection terminals A of the plurality of general blocks.

10. The block toy of any one of claims 7 to 9, further comprising at least one finishing block configured to provide notification of completion of the combination of blocks by being combined with the general blocks.

11. The block toy of any one of claims 7 to 9, wherein the control block further comprises a communication module configured to be communicatively connectable to a computer in order to upgrade the information recorded in the memory device.

12. The block toy of any one of claims 7 to 9, wherein the control block further comprises a communication module configured to transmit completed information to another terminal when the combination of blocks has been completed.

13. The block toy of any one of claims 7 to 9, wherein:
the control block further comprises a recording module configured to record the sound regarding the combination of blocks; and
the control device outputs the sound regarding the completed combination of blocks, recorded via the recording module, via the speaker when the combination of blocks has been completed.
